# EUROPÄISCHE PATENTSCHRIFT

(11) **EP 1 664 567 B1**
(45) Veröffentlichungstag und Bekanntmachung des Hinweises auf die Patenterteilung: **17.10.2007**
(21) Anmeldenummer: 04726452.8
(22) Anmeldetag: 08.04.2004
(51) Int. Cl.: F16D 25/12, F16D 25/0638, F16D 25/10, F16D 21/06

(54) **KUPPLUNGSVORRICHTUNG, INSBESONDERE LAMELLENKUPPLUNG FÜR EIN DOPPELKUPPLUNGSGETRIEBE**
CLUTCH DEVICE, IN PARTICULAR A MULTIPLATE CLUTCH FOR A DOUBLE-CLUTCH GEARBOX
DISPOSITIF D'EMBRAYAGE, EN PARTICULIER EMBRAYAGE A DISQUES POUR UNE BOITE DE VITESSES A EMBRAYAGE DOUBLE

(30) Priorität: 24.05.2003 DE 10323514
(43) Veröffentlichungstag der Anmeldung: 07.06.2006
(73) Patentinhaber: Dr. Ing. h.c. F. Porsche Aktiengesellschaft, 70435 Stuttgart (DE)
(72) Erfinder: HÖBEL, Peter, 75242 Neuhausen (DE)
(86) Internationale Anmeldenummer: PCT/EP2004/003756
(87) Internationale Veröffentlichungsnummer: WO 2004/104439

(56) Entgegenhaltungen:
- EP-A- 1 081 401
- AT-B- 386 870
- US-A- 4 629 050

## Beschreibung

Die Erfindung betrifft eine Kupplungsvorrichtung, insbesondere Lamellenkupplung für ein Doppelkupplungsgetriebe gemäß den Merkmalen des Oberbegriffs des Anspruchs 1.

Lamellenkupplungen sind hochtemperaturbelastete Bauteile, so dass insbesondere bei Mehrscheiben- Lamellenanordnungen eine Kühlung der Reiblamellen mit Schmieröl erforderlich ist. Derartige nasslaufende Lamellenkupplungen sind beispielsweise aus der EP 1 195 537 A1 bekannt, bei der die Reiblamellen einer Doppelkupplungsanordnung über in einem Innenlamellenträger vorgesehene Bohrungen mit Schmieröl versorgt werden. Die Ölführung bis zum Lamellenträger erfolgt dabei über einen Bauraum, der radial innerhalb des Innenlamellenträgers ausgebildet ist und den beiden Druckräumen (Arbeitskammern) zum Betätigen der beiden Kupplungen gegenüberliegt. Nachteilig dabei ist, dass bei der Schmierölzufuhr zu den Lamellen u.a. Leckageverluste auftreten und die Schmierölzufuhr aufgrund des beim Betätigen der Kupplungen veränderlichen Raumvolumens entsprechenden Druckschwankungen unterworfen ist. Zudem besteht bei vollständiger Nutzung des Bauraums unterhalb des Lamellenpakets keine Möglichkeit, Schmieröl zentral zwischen die Lamellen zu führen.

Aufgabe der Erfindung ist es daher, Maßnahmen vorzusehen, durch die eine gezielte und direkte Schmierölzufuhr zu den Kupplungslamellen erfolgt und Druckschwankungen in der Ölzufuhr vermieden werden.

Die Aufgabe wird durch die im Anspruch 1 angegebenen Merkmale gelöst.

Dadurch, dass die Schmierölkanäle im Innenlamellenträger integriert sind, ist eine zielgerichtete direkte Schmierölzufuhr zu den Kupplungslamellen möglich, so daß der gesamte Schmieröl- Volumenstrom ausschließlich dem Lamellenraum zuführbar ist.

Druckschwankungen werden unterbunden und der Wirkungsgrad der Schmierölversorgung damit insgesamt verbessert.

Der aus einer Nabe, einem umlaufenden Steg und einem verzahnten Trägerkranz bestehende Innenlamellenträger weist auf seiner Innenseite mindestens einen umlaufenden Ringkanal auf, der als Teil des Schmierölkanals dafür sorgt, dass das Schmieröl über im Trägerkranz angeordnete Bohrungen direkt und ausschließlich dem Lamellenraum zuführbar ist.

Durch die in den vom Anspruch 1 abhängigen Ansprüchen aufgeführten Maßnahmen sind weitere vorteilhafte Ausgestaltungen und Weiterbildungen der Kupplungsvorrichtung möglich.

Der bzw, die Ringkanäle werden auf einfache Art und Weise jeweils durch ein Ölführungsblech gebildet, das am Lamellenträger befestigt ist.

Die als Doppelkupplung ausgebildete Vorrichtung weist einen inneren und äußeren Kupplungskorb auf, in denen um ihren gesamten Umfang verteilt angeordnete Bohrungen vorgesehen sind, über die im Lamellenraum befindliches Schmieröl abgeführt werden kann.

Ein Ausführungsbeispiel der Erfindung ist in der nachfolgenden Beschreibung und Zeichnung näher erläutert.

Es zeigen:
- Fig. 1: eine Teilschnittdarstellung einer hydraulisch betätigbaren Kupplung für ein Doppelkupplungsgetriebe,

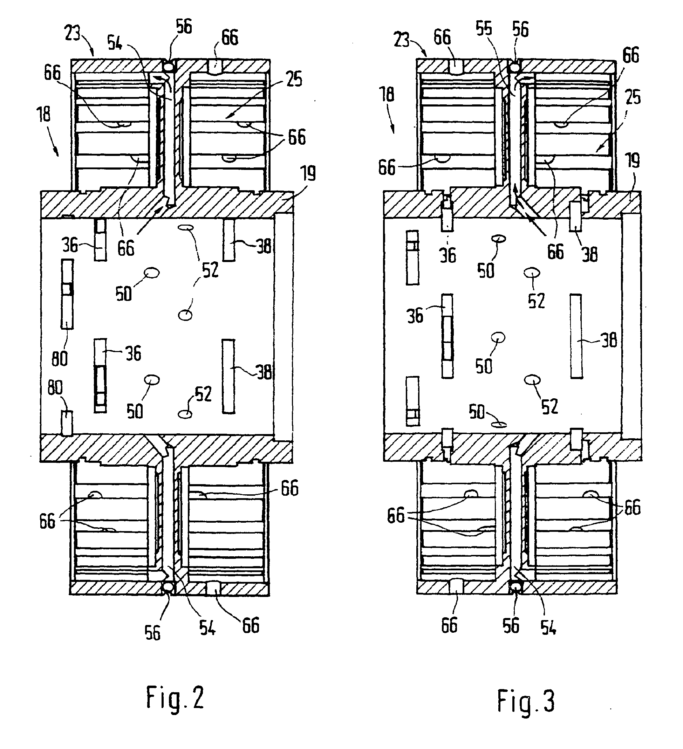

- Fig. 2: einen ersten Längsschnitt durch einen Lamellenträger der Kupplung und
- Fig. 3: einen zweiten Längsschnitt durch den Lamellenträger.

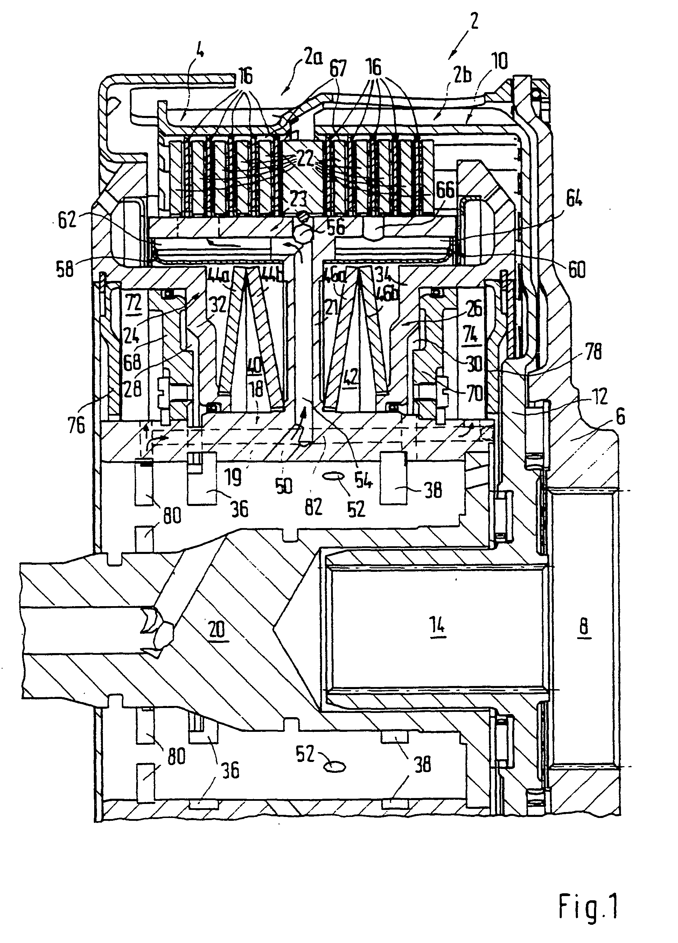

In Fig. 1 ist eine nicht auf die Erfindung eingeschränkte Ausführungsform einer Lamellenkupplung 2 dargestellt, die mit zwei getrennten Kupplungseinheiten 2a und 2b beispielsweise in einem Doppelkupplungsgetriebe zwischen dem Motor und der Getriebeeinheit eines Kraftfahrzeuges Aufnahme findet.

Im folgenden sind die wesentlichen Bauteile der Lamellenkupplung 2 beschrieben. Sie besteht aus einem äußerem Kupplungskorb 4, dessen stirnseitig angeordnete Mitnehmerscheibe bzw. Nabe 6 über eine zentrale innenverzahnte Öffnung 8 mit einer nicht dargestellten ersten Getriebeeingangswelle verbunden ist. Diese beispielsweise als Hohlwelle ausgebildete erste Getriebeeingangswelle trägt die Zahnräder für die geraden Gänge des Doppelkupplungsgetriebes. Ein zweiter, innerer Kupplungskorb 10 weist eine Mitnehmerscheibe bzw. Nabe 12 auf, die ebenfalls mit einer innenverzahnten, zentralen Öffnung 14 versehen ist. In die innenverzahnte Nabe 12 ist eine zweite, nicht dargestellte Getriebeeingangswelle aufgenommen, die beispielsweise als Vollwelle koaxial zur ersten Getriebeeingangswelle verläuft und die Zahnräder für die ungeraden Gänge des Doppelkupplungsgetriebes trägt. Im äußeren und inneren Kupplungskorb 4, 10 sind außenverzahnte Scheiben bzw. Stahllamellen 16 aufgenommem, die in entsprechende Nuten des äußeren und inneren Kupplungskorbes 4, 10 eingreifen. Darüber hinaus ist für beide Kupplungseinheiten 2a und 2b ein gemeinsamer Lamellenträger, im folgenden als Innenlamellenträger 18 bezeichnet, vorgesehen. Der Innenlamellenträger 18 besteht aus einer Nabe 19, die mit einer motorseitig angebundenen Welle 20 drehfest verbunden ist, einem umlaufenden zentralen Steg 21, sowie einem umlaufenden Trägerkranz 23, der eine Außenverzahnung 25 aufweist, in die getriebene innenverzahnte und mit einem Reibbelag versehene Scheiben bzw. Lamellen 22 eingreifen. Beide Kupplungseinheiten 2a und 2b werden über eine hydraulische Betätigungseinrichtung gesteuert. Dazu sind zwei für beide Kupplungseinheiten 2a und 2b identisch ausgebildete Kolben/Zylindereinheiten 24 und 26 vorgesehen, deren Druckräume 28, 30 zum Betätigen der Kolben 32 und 34 über entsprechende Ölkanäle 36 und 38 mit Drucköl versorgt werden. Die Ölkanäle 36, 38 sind als sichelförmige Ausnehmungen radial verteilt in der Nabe 19 des Innenlamellenträgers 18 ausgebildet. In den den Druckräumen 28 und 30 gegenüberliegenden zwei Räumen 40 und 42 sind Federelemente 44 und 46 (jeweils zwei Scheibenfedern 44a,44b bzw. 46a, 46b) angeordnet, die bei nicht betätigten Kolben 32 und 34 beide Kupplungseinheiten 2a und 2b geöffnet halten, so dass zwischen Motor und Getriebe keine Wirkverbindung besteht.

Zur Kühlung der Lamellen 16, 22 der beiden Kupplungseinheiten 2a und 2b sind in der Nabe 19 des Lamellenträgers 18 jeweils mehrere radial um den Umfang verteilt angeordnete Ölbohrungen 50 und 52 vorgesehen, die das über eine nicht dargestellte Ölpumpe geförderte Schmieröl über mehrere im umlaufenden Steg 21 des Lamellenträgers 18 ausgebildete Ölkanäle 54 und 55 den Lamellen 16, 22 beider Kupplungseinheiten 2a und 2b gezielt zuführen. Die aus fertigungstechnischen Gründen offen ausgebildeten Ölkanäle 54 sind an ihren radialen Enden mit einem Stopfen 56 verschlossen. Für die gezielte Ölzufuhr zu den Lamellen 16, 22 sind weiterhin auf der Mantelinnenseite des Trägerkranzes 23 für jede Kupplungseinheit 2a, 2b mit einem umlaufenden Kragen versehene Ölführungsbleche 58, 60 vorgesehen, die am Trägerkranz 23 und am umlaufenden Steg 21 befestigt sind. Dadurch bildet sich für jede Kupplungseinheit 2a, 2b ein um den Umfang des zylinderförmigen Lamellenträger-Bauteils 18 geschlossener Ringkanal 62 und 64 aus, der mit den Ölkanälen 54 bzw. 55 verbunden ist. Auf der gesamten Mantelfläche des Trägerkranzes 23 sind mit den beiden Ringkanälen 62 und 64 verbundene Bohrungen 66 eingebracht, über die den in eeinem Raum 67 angeordneten Lamellen 16, 22 schlussendlich das Öl zugeführt wird. In den Reibbelägen der innenverzahnten Lamellen 22 sind entsprechende Nuten (nicht dargestellt) eingebracht, in denen das Schmieröl zur Kühlung der Lamellenpaarungen gezielt entlang strömen kann. In den Mantelflächen des äußeren und des inneren Kupplungskorbes 4, 10 sind ebenfalls um den gesamten Umfang verteilt angeordnete Bohrungen (nicht dargestellt) vorgesehen, über die das Schmieröl wieder in einen Ölsumpf zurück geführt werden kann.

Die beiden Druckräume 28 und 30 werden seitlich von jeweils einem auf der Nabe 19 befestigten Träger- und Führungselement 68 und 70 für die Kolben 32 und 34 begrenzt. Den beiden Druckräumen 28 und 30 liegen -getrennt von den Trägerelementen 68, 70-zwei Druckausgleichskammern 72 und 74 gegenüber, die auf ihrer anderen Seite durch zwei an den Kolben 32 und 34 befestigten Ringblechen 76 und 78 begrenzt sind. Den beiden Druckausgleichskammern 72 und 74 ist Öl über in der Nabe 19 eingebrachte radiale Ölkanäle 80 sowie axial verlaufende Ölkanäle 82 zuführbar. Durch die Druckausgleichskammern 72 und 74 können auf die Kolben 32 und 34 wirkende Fliehkräfte, die durch das in den Druckräumen 28 bzw. 30 befindliche Öl erzeugt werden, kompensiert werden.

## Patentansprüche

1. Kupplungsvorrichtung für ein Doppelkupplungsgetriebe mit zwei Kupplungseinheiten (2a, 2b), die zwischen Motor und Getriebe angeordnet ist, mit mehreren Kupplungsscheiben (16, 22), die im Wechsel als außen- und innenverzahnte Lamellen bzw. Scheiben an einem Innen- bzw. Außenlamellenträger (4, 10, 18) drehfest aufgenommen sind, wobei die Lamellen zur Kühlung der (Nass-) Kupplung mit Schmieröl versorgt werden, sowie mit einem Hydraulikmechanismus (24, 26) zum Betätigen der Kupplung, wobei im Innenlamellenträger (18) Schmierölkanäle (50, 52, 54, 62, 64) integriert sind, die eine direkte Beölung der Lamellen (16, 22) ermöglichen, und wobei der Innenlamellenträger (18) eine Nabe (19), einen umlaufenden zentralen Steg (21) sowie einen umlaufenden Trägerkranz (23) aufweist,
**dadurch gekennzeichnet, dass**
- auf der Innenseite des Innerlamellenträgers für eine gezielte Ölzufuhr der beiden Kupplungseinheiten (2a, 2b) mindestens ein Ringkanal (62, 64) derart ausgebildet ist, dass
- für jede Kupplungseinheit (2a, 2b) jeweils ein um den Umfang des Lamellenträgers (18) geschlossener Ringkanal (62, 64) vorliegt, der ein Teil des Schmierölkanals bildet und der über im Trägerkranz (23) ausgebildete Öffnungen (66) mit dem Lamellenraum (67) der beiden Kupplungseinheiten (2a, 2b) verbunden ist.

2. Kupplungsvorrichtung nach Anspruch 1, **dadurch gekennzeichnet, dass** der Ringkanal (62, 64) durch ein Ölführungsblech (58, 60) gebildet ist, das am Innenlamellenträger (18) befestigt ist.

3. Kupplungsvorrichtung nach Anspruch 1 oder 2, **dadurch gekennzeichnet, dass** der Außenlamellenträger aus einem inneren und einem äußeren Kupplungskorb (10, 4) besteht, in denen um den gesamten Umfang verteilt angeordnete Bohrungen vorgesehen sind, über die das im Lamellenraum (67) befindliche Schmieröl zu einem Ölsumpf zurückführbar ist.

## Claims

1. A clutch device for a twin-clutch gearbox having two clutch units (2a, 2b), the device being arranged between the engine and the gearbox, with a plurality of clutch discs (16, 22) which are formed as externally and internally toothed plates or discs and are held alternately in a rotationally fixed manner on an inner and an outer plate carrier (4, 10, 18), wherein the plates are supplied with lubricating oil for cooling the (wet) clutch, and with a hydraulic mechanism (24, 26) for operating the clutch, wherein lubricating-oil ducts (50, 52, 54, 62, 64) are integrated into the inner plate carrier (18) and permit direct lubrication of the plates (16, 22) and wherein the inner plate carrier (18) has a hub (19), a circumferential central web (21) and a circumferential carrier crown (23), **characterised in that**
- for supplying oil to the two clutch units (2a, 2b) in a targetted manner, at least one annular duct (62, 64) is formed on the inside of the inner plate carrier in such a way that
- for each clutch unit (2a, 2b) a respective annular duct (62, 64) is provided which is closed around the circumference of the plate carrier (18) and which forms part of the lubricating-oil duct and is connected to the plate chamber (67) of the two clutch units (2a, 2b) via openings (66) formed in the carrier crown (23).

2. A clutch device according to claim 1, **characterised in that** the annular duct (62, 64) is formed by an oil-guiding plate (58, 60) fastened to the inner plate carrier (18).

3. A clutch device according to claim 1 or 2, **characterised in that** the outer plate carrier consists of an inner and an outer clutch basket (10, 4) in which are provided bores which are distributed around the entire circumference and via which the lubricating oil in the plate chamber (67) can be fed back to an oil sump.

## Revendications

1. Dispositif d'embrayage pour une transmission à embrayage double avec deux unités d'embrayage (2a, 2b), lequel est monté entre le moteur et la transmission , comportant plusieurs disques d'embrayage (16, 22) sous forme de lamelles ou disques munis en alternance d'une denture extérieure et d'une denture intérieure, lesquels sont montés solidaires en rotation sur un support des disques intérieurs et un support des disques extérieurs (4, 10, 18), sachant que les disques sont alimentés en huile de lubrification en vue du refroidissement de l'embrayage (lubrifié), et comportant un mécanisme hydraulique (24, 26) destiné à actionner l'embrayage, des conduits d'huile de lubrification (50, 52, 54, 62, 64) qui permettent une lubrification directe des disques (16, 22) étant intégrés dans le support des disques intérieurs (18), et le support des disques intérieurs (18) comportant un moyeu (19), une âme (21) centrale rotative, ainsi qu'une couronne de support (23) rotative, **caractérisé en ce que**
- sur la face intérieure du support des disques intérieurs est réalisé au moins un conduit annulaire (62, 64) pour une alimentation en huile ciblée des deux unités d'embrayage (2a, 2b), de telle sorte que,
- pour chacune des unités d'embrayage (2a, 2b), un conduit annulaire (62, 64) soit réalisé sur le pourtour du support de disques (18), lequel forme une partie du conduit d'huile de lubrification et lequel est relié à l'espace des disques (67) des deux unités d'embrayage (2a, 2b) par l'intermédiaire de perçages (66) réalisés dans la couronne de support (23).

2. Dispositif d'embrayage selon la revendication 1, **caractérisé en ce que** le conduit annulaire (62, 64) est formé par une tôle de guidage d'huile (58, 60) qui est fixée sur le support des disques intérieurs (18).

3. Dispositif d'embrayage selon la revendication 1 ou 2, **caractérisé en ce que** le support des disques extérieurs est formé par une cage d'embrayage intérieure (10) et une cage d'embrayage extérieure (4), dans lesquelles sont prévus des perçages répartis sur tout le pourtour, par l'intermédiaire desquels l'huile de lubrification contenue dans l'espace de disques (67) peut retourner vers un carter à huile.
